# EUROPEAN PATENT APPLICATION

(11) **EP 3 107 303 A1**
(43) Date of publication of application: **21.12.2016**
(21) Application number: 16172944.7
(22) Date of filing: 03.06.2016
(51) Int. Cl.: H04N 21/426, H04N 5/46, H04N 7/10, H04N 21/61

(54) **ATTACHED TV SIGNAL TUNER AND ELECTRONIC DEVICE**

(30) Priority: 16.06.2015 CN 201520416735 U
(71) Applicant: Le Shi Zhi Xin Electronic Technology (Tianjin) Limited, Beiling 100025 (CN)
(72) Inventor: Song, Jian, Beijing 100025 (CN)
(74) Representative: Cohausz & Florack

(57) **Abstract**

The present invention provides an attached TV signal tuner and an electronic device so as to install the attached TV signal tuner simply and conveniently and to save a space reserved for installing an attached device of a smart TV The attached TV signal tuner includes a TV signal tuner body and a USB terminal connected therewith, the USB terminal being capable of being engaged with a USB interface of a smart TV, and the TV signal tuner body including a first radio-frequency signal terminal, a second radio-frequency signal terminal, a tuner chip, and a signal switch, wherein the tuner chip is connected with the USB terminal; and the signal switch connects the first radio-frequency signal terminal with the tuner chip at a first operating position, and the second radio-frequency signal terminal with the tuner chip at a second operating position.

## Description

This application claims the benefit of Chinese Patent Application 201520416735.2, filed with the State Intellectual Property Office of People's Republic of China on June 16, 2015 and entitled "attached TV signal tuner and electronic device", which is hereby incorporated by reference in its entirety.

### Field

The present invention relates to the field of electronic devices and particularly to an attached TV signal tuner and an electronic device.

### Background

At present a wired TV signal and a wireless TV signal frequently coexist, so a TV signal tuner needs to support an input of the two signals thereto, and one of the signal sources is selected by a user on a TV interface.

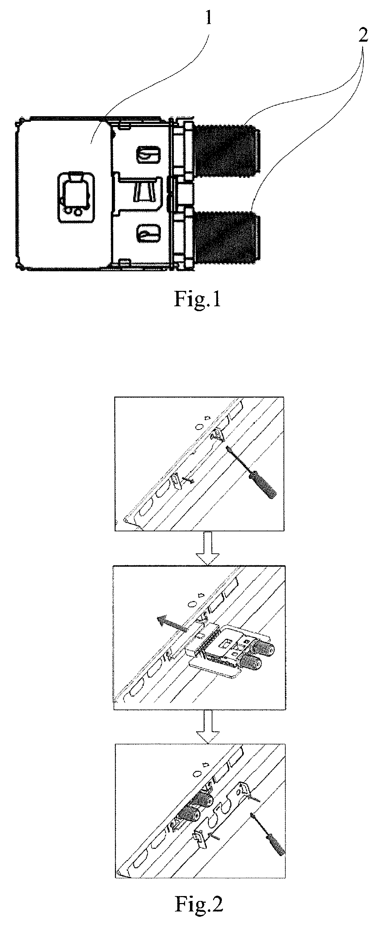

As illustrated in Fig.1, the existing attached TV signal tuner 1 is shaped like a box including TV signal terminals 2. An attached TV signal tuner slot is reserved on the housing of a TV, and a baffle is arranged at the entry to the slot. As illustrated in Fig.2, the user installs the existing attached TV signal tuner 1 by firstly detaching the baffle at the entry to the slot using a screwdriver, then inserting the existing attached TV signal tuner 1 into the slot in the direction denoted by the arrow, and pushing the existing attached TV signal tuner 1 to the bottom of the slot, and next attaching back the baffle and fixing it using the screwdriver.

A drawback of the prior art lies in complicated installation of the existing attached TV signal tuner; and moreover such a significant space is occupied by the slot reserved for the existing attached TV signal tuner that there may be short of a layout space because there are an increasing number of attached devices supported by the smart TV.

### Summary

Embodiments of the present invention provide an attached TV signal tuner and an electronic device so as to install the attached TV signal tuner simply and conveniently and to save a space reserved for installing an attached device of a smart TV.

An embodiment of the present invention provides an attached TV signal tuner including a TV signal tuner body and a USB terminal connected therewith, the USB terminal being capable of being engaged with a USB interface of a smart TV, and the TV signal tuner body including a first radio-frequency signal terminal, a second radio-frequency signal terminal, a tuner chip, and a signal switch, wherein:
the tuner chip is connected with the USB terminal; and
the signal switch connects the first radio-frequency signal terminal with the tuner chip at a first operating position, and the second radio-frequency signal terminal with the tuner chip at a second operating position.

Preferably the TV signal tuner body and the USB terminal are connected through a USB wire rod.

Preferably the USB terminal is a USB3.0 terminal, the USB interface is a USB3.0 interface, and the USB wire rod is a USB3.0 wire rod.

Preferably the first radio-frequency signal terminal is a wired TV signal terminal, and the second radio-frequency signal terminal is a wireless TV signal terminal.

As compared with the attached TV signal tuner in the prior art, with the USB terminal, the attached TV signal tuner according to the embodiment of the present invention will occupy a smaller space reserved for an external device of the smart TV, and can be installed simply.

An embodiment of the present invention further provides an electronic device including the attached TV signal tuner according to any one of the technical solutions above.

### Brief Description of the Drawings

In order to make the technical solutions in the embodiments of the present invention or the prior art more apparent, the drawings to which reference is made in a description of the embodiments or the prior art will be briefly introduced below, and apparently the drawings to be described below are merely illustrative of some embodiments of the present invention, and those ordinarily skilled in the art can derive from these drawings other drawings without any inventive effort. In the drawings:
Fig.1 is a schematic structural diagram of the attached TV signal tuner in the prior art;
Fig.2 is a schematic diagram of installing the attached TV signal tuner in the prior art;
Fig.3 is a schematic structural diagram of an attached TV signal tuner according to an embodiment of the present invention; and
Fig.4 is a schematic structural diagram of circuits in a TV signal tuner body according to an embodiment of the TV signal tuner.

### Reference Numerals:

1-Existing attached TV signal tuner;
2-TV signal terminal;
3-TV signal tuner body;
4-USB terminal;
5-First radio-frequency signal terminal;
6-Second radio-frequency signal terminal;
7-USB wire rod;
8-Tuner chip;
9-Signal switch;
10-USB signal line.

### Detailed Description of the Embodiments

In order to make the objects, the technical solutions and the advantages of the present invention more apparent, the present invention will be further described in details with reference to the drawings. Apparently the described embodiments are only a part but all of the embodiments of the present invention. Based upon the embodiments of the present invention here, all of other embodiments derived by those ordinarily skilled in the art without any inventive effort shall come into the scope of the present invention.

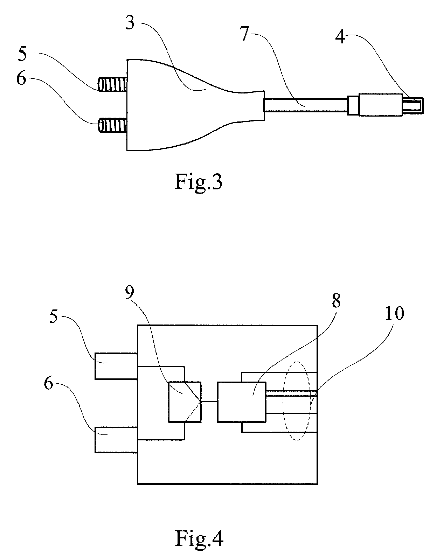

As illustrated in Fig.3 and Fig.4, an attached TV signal tuner according to an embodiment of the present invention includes a TV signal tuner body 3 and a USB terminal 4 connected therewith, the USB terminal 4 can be engaged with a USB interface of a smart TV, and a circuitry structure of the TV signal tuner body 3 includes a first radio-frequency signal terminal 5, a second radio-frequency signal terminal 6, a tuner chip 8, and a signal switch 9, where the tuner chip 8 is connected with the USB terminal 4 through a USB signal line 10, and the signal switch 9 connects the first radio-frequency signal terminal 5 with the tuner chip 8 at a first operating position, and the second radio-frequency signal terminal 6 with the tuner chip 8 at a second operating position.

The tuner chip 8 can convert data information obtained from the first radio-frequency signal terminal 5 or the second radio-frequency signal terminal 6 into data information compliant with the Universal Serial Bus (USB) protocol, and exchange data with the TV set through a USB wire rod 7 and the USB terminal 4. The USB protocol is an external bus standard specifying connection and communication between a computer and an external device. The USB interface is convenient to use, supports a Plug and Play mode, and can be connected flexibly, power on its own, and be connected with a variety of external devices, so the USB interface is widely on personal computers and smart devices at present. With the USB interface, the computers or the smart devices can identify automatically the type of an attached device and further start a corresponding software configuration.

After the user going to access the attached TV signal tuner according to the embodiment of the present invention, engages the USB terminal of the attached TV signal tuner with the USB interface of the smart TV, the smart TV will identify automatically the attached TV signal tuner and start the corresponding software configuration, and the user can select a TV signal, and receive a TV program, by operating on the corresponding software. As compared with the attached TV signal tuner in the prior art, the attached TV signal tuner according to the embodiment of the present invention will occupy a smaller space reserved for an external device of the smart TV, and can be installed simply.

As illustrated in Fig.3, in an embodiment of the present invention, the TV signal tuner body 3 and the USB terminal 4 are connected through the USB wire rod 7. With the SUB wire rod, the distance between the USB terminal 4 and the TV signal tuner body 3 can be increased so that the TV signal tuner body 3 can be placed flexibly in position.

In an embodiment of the present invention, the USB terminal 4 in use is a USB3.0 terminal, the USB interface is a USB3.0 interface, and the USB wire rod 7 is a USB3.0 wire rod.

The existing USB interfaces generally include USB2.0 and USB3.0 interfaces. Data of the USB3.0 interface are transmitted over 9 lines, which are more than 4 lines over which USB2.0 data are transmitted, and the USB3.0 interface and the USB3.0 wire rod can be compatible with the USB2.0. The broadest transmission bandwidth of the USB3.0 interface is up to 5.0Gbps (500MB/s), which is more than 8 times the transmission bandwidth of the USB2.0. There is a strict electrical specification in the USB3.0 standard to ensure the integrity of a high-speed signal as much as possible.

The attached TV signal tuner according to the embodiment of the present invention supports an input of both a wireless TV signal and a wired TV signal thereto. Particularly the first radio-frequency signal terminal 5 is a wired TV signal terminal, and the second radio-frequency signal terminal 6 is a wireless TV signal terminal. The user can select one of the TV signals on the TV interface, and the selection information can be transmitted to the tuner chip 8 via the USB interface, so that the tuner chip 8 can control the signal switch 9 to be connected with the corresponding signal terminal selected by the user.

An embodiment of the present invention further provides an electronic device including the attached TV signal tuner according to any one of the technical solutions above. The electronic device can include a smart TV, a display device, etc., but will not be limited thereto.

Last it shall be noted that the embodiments above are merely illustrative of the technical solutions according to the present invention but not intended to limit them; and although the present invention has been described in details with reference to the embodiments above, those ordinarily skilled in the art shall appreciate that they still can modify the technical solutions according to the respective embodiments above, or make equivalent substitutions to a part of the technical features therein; and the essence of the corresponding technical solutions will not depart from the spirit and scope of technical solutions according to the respective embodiments of the present invention due to these modifications or substitutions.

## Claims

1. An attached TV signal tuner, comprising a TV signal tuner body and a USB terminal connected therewith, the USB terminal being capable of being engaged with a USB interface of a smart TV, and the TV signal tuner body comprising a first radio-frequency signal terminal, a second radio-frequency signal terminal, a tuner chip, and a signal switch, wherein:
the tuner chip is connected with the USB terminal; and
the signal switch connects the first radio-frequency signal terminal with the tuner chip at a first operating position, and the second radio-frequency signal terminal with the tuner chip at a second operating position.

2. The attached TV signal tuner according to claim 1, wherein the TV signal tuner body and the USB terminal are connected through a USB wire rod.

3. The attached TV signal tuner according to claim 1 or 2, wherein the USB terminal is a USB3.0 terminal, the USB interface is a USB3.0 interface, and the USB wire rod is a USB3.0 wire rod.

4. The attached TV signal tuner according to claim 3, wherein the first radio-frequency signal terminal is a wired TV signal terminal, and the second radio-frequency signal terminal is a wireless TV signal terminal.

5. An electronic device, comprising the attached TV signal tuner according to any one of claims 1 to 4.
